# EUROPEAN PATENT SPECIFICATION

(11) **EP 0 511 620 B1**
(45) Date of publication and mention of the grant of the patent: **22.07.1998**
(21) Application number: 92107193.2
(22) Date of filing: 28.04.1992
(51) Int. Cl.: C08G 59/18, C09D 163/00, C09D 5/02

(54) **Aqueous emulsions of epoxyphenolic resins**
Wässrige Emulsionen auf der Basis von Epoxyd- und Phenolharzen
Emulsions aqueuses à base de résines époxydes et phénoliques

(30) Priority: 29.04.1991 IT MI911168
(43) Date of publication of application: 04.11.1992
(73) Proprietor: SIR INDUSTRIALE S.p.A., Macherio (MI) (IT)
(72) Inventor: Ferrara, Matteo, I-20059 Vimercate,Milan (IT)
(74) Representative: Gervasi, Gemma, Dr.

(56) References cited:
- EP-A- 0 040 869
- FR-A- 2 068 390

## Description

The present invention relates to the preparation of formulates based on epoxyphenolic resins in aqueous emulsion, containing minimal amounts of volatile organic solvents.

It is well-known that by combining the excellent characteristics of mechanical properties and chemical resistance of the epoxy resins with those of phenolic resins, products are obtained which are endowed with considerably high resistance to aggressive chemicals, to sterilization and to solvents, which enable said products to be used in interesting applications in the industrial field, above all for:
- corrosion-resistant primings for electrical house appliances and car bodyworks;
- oven-coatings for white latten and aluminum, destined to the production of containers for alimentary, cosmetics and chemical industries ("litolatta");
- protective coatings for fuel drums and tanks;
- coatings of electrical wires and windings.

All the above, because these systems display very good properties as electrical insulators, of moisture resistance, heat resistance, and high adhesion capabilities.

The traditional, solvent-based epoxyphenolic systems are considerably diffused; however, owing to the high level of volatile organic components contained in them, their use constitutes a serious safety problem in working premises, due to the easy flammability of such materials, combined with a rather high toxicity level of the organic solvents contained in them. Furthermore, the ample range of problems concerning industrial waste disposal, the emission of volatile organic substances released into the environmental atmosphere at the time of paint film crosslinking, render more and more burdensome the use of solvent-based systems.

In the industry, the need is felt for novel systems in the form of aqueous emulsions which -- while retaining the extremely good performance features of the well-proven traditional formulates -- allow a normal use to be made of said formulations, by drastically reducing the level of organic solvents contained in them.

Of course, inasmuch as they are based on organic matrices, such systems will retain a considerably high level of hydrophobicity and hence incompatibility with the aqueous medium, so that the epoxyphenolic have to be suitably prearranged, in order to endow them which higher water-compatibility characteristics. From literature, several techniques for emulsifying epoxy systems are already known, which basically have resort to the formation of reaction products between epoxy groups and amines, which are subsequently salified with organic acids, thus rendering the whole system a dispersible-in-water one (Japanese patent application 63/26092).

Unfortunately said aqueous emulsions are thermodynamically unstable, and tend to coagulate with time. Such a drawback displayed by the traditional technology is overcome by using such auxiliary products as emulsifiers and pro- tectant colloids. The emulsifiers are molecules which simultaneously show hydrophilic and hydrophobic properties, which favour the compatibility between the organic system and the aqueous medium, forming micellar aggregates with perfectly ordered structure, in which the surfactant acts as a bridging molecule between polar arid apolar components.

Not always the use of emulsifiers allows satisfactory results to be effectively attained, both owing to the considerably high unstability of the micellar aggregates --which are strongly influenced by the environmental conditions -- and because such aggregates constitute foreign bodies inside the system, which, at crosslinking time, do not take a part in crosslinked matrix formation and sometimes cause a decay in paint's physical-chemical characteristics, mainly as regards paint's resistance to chemicals.

From U.S. patent No. 4,454,265, preparing aqueous emulsions of epoxyphenolic resins using, as modifiers, ketoiminic compounds obtained from the condensation of ketones with polyamines followed by hydrolysis to obtain hydrophilic moieties, is known.

This preparation method suffers from the drawback that it uses ketones, which are easily flammable products, rather undesired from the environmental viewpoint.

Furthermore, the overall content of organic solvent, as referred to the solid matter, remains relatively very high (higher than 15-20%), in that, on hydrolysis, the ketonic compound is restored, which increases the level of organic solvent contained in the emulsion.

FR-A-2,068,390 describes emulsifying curing agents for epoxy resins obtained by reaction of polyamines with diglycidylethers of polyglycols. The obtained aqueous emulsions show a rather short pot life.

The present Applicant found now that stable epoxyphenolic emulsions can be obtained with low contents of organic solvents, without using surface-active agents, if the system is suitably modified, so as to introduce into it hydrophilic moieties which render the whole formulate a more-affine-with-water one, anyway without changing its chemical nature to such an extent as to jeopardize the reactivity thereof. The stable emulsions of the invention are described in the claims.

Inasmuch as the phenolic resin used in the preparation of the emulsions of the present invention is of resolic type, and therefore, thanks to its hydroxymethyl chain-end moieties -- which endow it with a higher affinity for the aqueous medium - has a more polar character than the epoxy resin, the chemical modification is carried out on the epoxy resin by inserting onto it, according to the method disclosed in the following, polar groups which endow said resin with a high compatibility with the aqueous medium.

The phenolic resin can be directly mixed with the resulting modified epoxy resin; however, in order to obtain more satisfactory results, the phenolic resin is preferably partially condensed with the "epoxy surfactant" formed in situ.

According to this preferred form of practical embodiment, a pre-condensate is formed in which the whole system, by being intimately interconnected, displays a high self-compatibility and a considerable affinity for the aqueous medium.

The epoxy resins used in the present invention are the condensation products of Bisphenol A or F and epichlorohydrin, with an epoxy equivalent weight (EEW) value comprised within the range of from 400 to 3500 g, preferably an EEW value comprised within the range of from 1500 to 3500 g.

Examples of epoxy resins are EPOSIR 7180 (SIR) and EPIKOTE 1007 (SHELL).

The phenolic resins used in this process are of resolic type and are synthetized by starting from such special monomers, as Bisphenol A and p-tert.-butylphenol, condensed with formaldehyde. In the present invention, the phenolic resins containing alkyl substituents on the aromatic ring, which supply the paint films with better water-repellency, are preferred.

The first step of synthesis, in which the epoxy resin is modified and the pre-condensate with the phenolic resin is prepared, is carried out in polar, organic solvents with hydrophilic character; in particular, solvents miscible with water are used, among which alcohols, glycolesters and esters may be cited. After the formation of the epoxyphenolic condensate and the subsequent addition of a volatile organic acid, such as acetic acid, for the quaternization of the aminic nitrogen contained in the modified epoxy resin, water is gradually added to the system, with a water-in-oil emulsion being formed initially. Subsequently, as increasing amounts of water are added, with strong stirring, the phase inversion occurs, and said water-in-oil emulsion turns into an oil-in-water one: the aqueous emulsion is thus formed. The epoxyphenolic emulsions of the present invention comprise hence the reaction product of an epoxy resin with a high-medium value of epoxy equivalent weight (EEW = 400 - 3500), suitably modified according to the method disclosed in the following (epoxy surface-active agent) and a phenolic resin of resolic type.

The aqueous emulsions contain 10-80% by weight, and preferably 20-50%, of non-volatile substances. The phenolic resin amount used in order to prepare them is comprised within the range of from 20 to 40% by weight, relatively to the weight of non-volatile matter, and the epoxy resin is contained at a level of 40-80% by weight, and the epoxy modifier is used in amounts which may reach 20% by weight.

The content of organic solvent, which in the epoxyphenolic systems known from the prior art is of approximately 60%, is reduced down to-values lower than 15-20% in the emulsions according to the present invention. The viscosity of the emulsions is comprised within the range of from 15 to 15,000 mPa.s, and preferably of from 100 to 500 mPa.s at 25°C.

Besides the resin matrices, the emulsions can also contain such auxiliary agents as surfactants, dispersant additives and wetting additives, which enhance the characteristics of the finished part.

The emulsions are considerably stable at room temperature for some months, and display the characteristic of being unlimitedly dilutable both in water and in water-miscible organic solvents.

The epoxy surfactant of the present invention is obtained from the reaction between epoxy resins with a medium- high value of equivalent epoxy weight (EEW = 400 - 3500 g), with an epoxyaminic adduct prepared as follows.

An adduct with secondary aminic functionalities is prepared by condensing, according to methods already known from the prior art, an aliphatic amine containing one or more ether, thioether linkages and/or hydroxy groups, with an epoxy resin of polyoxyakyleneglycol, in particular polyoxyethylene-(propylene)-glycol, di-(polyglycidyl)-ether type.

The structural formula of useable amines can be represented as follows: 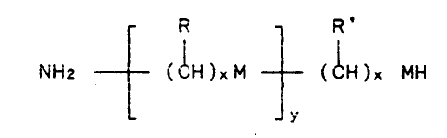 wherein:
R and R', which may be equal to, or different from, each other, can be hydrogen, C₁-C₆ alkyl radical, OH, CH₂0H, CH₂0R, NHR;
   1≤x≤4;
   0≤y≤10;
M = oxygen, sulfur.
   Preferred amines are:
   - monoethanolamine;
   - 2-(2-aminoethoxy)-ethanol;
   - 2-(2-aminoethoxy)-propanol.

However, in lieu of the above cited adduct, secondary amines can also be used, which belong to the family of hydroxy-polyetheramines of formula: 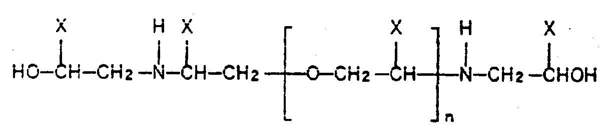 wherein:
X = hydrogen, alkyl, alkoxy, OH, polyoxyalkylene;
2≤n≤10.

The preferred amine is JEFFAMINE C-346 (TEXACO).

As said hereinabove, the epoxy resins used in order to prepare the epoxy-aminic adducts specified hereinabove, belong to the class of polyoxyalkyleneglycol poly(glycidyl)-ethers, in particular, polyoxyethylene(propylene)-glycol poly- glycidyl-ethers, of formula: 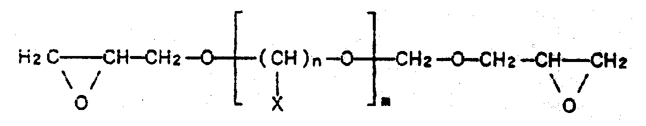 wherein:
X = hydrogen, alkyl, alkoxy;
1≤n≤3;
2≤m≤40.

Preferred epoxy resins are:
- EPOSIR 7117 (S.I.R.);
- DER 732 (DOW);
- DER 736 (DOW).

In greater detail, a typical adduct can be prepared as follows:
Inside a reaction vessel of 1000 cc of capacity, equipped with stirrer, thermometer and condenser, to 105 g of 2-(2-aminoethoxy)-ethanol (1 mol), 300 g of EPOSIR 7117 (0.5 mol) is slowly added, while the system is being kept stirred and at the temperature of 60°C.

The condensation reaction is allowed to proceed for 2 hours, with reaction exotherm being kept controlled. A reaction product is thus obtained, which contains two secondary aminic functions bonded to the oxiranic moieties of the epoxy resin, perfectly dilutable in water. The resulting adduct is designated as "AE".

The phenolic resins of resolic type used in the present invention are obtained from the condensation of about 1 mol of such phenolic monomers, as Bisphenol A and p-tert.-butylphenol, with approximately 1 mol of formaldehyde. Such products contain from 20 to 100% of solid matter. The solvent for the resin is an etherglycol, or an acetate, preferably butyl Cellosolve.

For exemplifying purposes, 1389 g of p-tert.-butylphenol and 370 g of Bisphenol A are reacted in an alkaline medium with 1270 g of formaldehyde at 36% in water, for approximately 1 hour, with the system being kept under reflux conditions. The reaction mass is subsequently neutralized with a strong mineral acid and the aqueous phase is separated from the organic phase, which contains the phenolic resin. Water is distilled off from the resin, and the system is diluted in butyl Cellosolve, until the desired content of solid matter is obtained (phenolic resin "F").

### Example 1

300 g of EPOSIR 7180 [Bisphenol A di-glycidylether; (DGBEA), with EEW = 1500-2550] is dissolved in 100 g of butyl Cellosolve, in a reaction vessel of 3000 ml of capacity, equipped with stirrer, thermometer and reflux condenser.

To the resulting solution, 90 g of the epoxy adduct AE previously prepared is added, and the system is kept under condensation conditions, for 10 to 30 minutes, at the temperature of 75°C.

Subsequently, 230 g of phenolic resin F, previously prepared as disclosed hereinabove, having a solids content of 70%, is added. The system is kept under condensation conditions for approximately 30 minutes, with the temperature being kept comprised within the range of from 70 to 75°C.

When pre-condensate formation is complete, the system is neutralized with 15 g of acetic acid, which is gradually added to the reaction mass, which is then kept stirred for a further 5 minutes. After the neutralization step, the addition is gradually started of 700 g of demineralized water, with strong stirring. Such an operation is performed during a time of approximately 60 minutes, with the system being kept at the temperature of 60°C, When addition is complete, an aqueous epoxyphenolic emulsion is obtained, having the following characteristics:
^{*} Solids content 38 ± 1%
^{*} Viscosity at 25°C : 150 mPa.s
^{*} H₂0 content : 49%

In a typical application, the aqueous emulsion was applied to while latten, by means of a suitable spiral film applicator, to yield a film thickness of 20 microns, and the resulting sample was submitted to a baking cycle of 15 minutes at 210°C in an oven. The crosslinked paint was hard, flexible and chemically resistant to sterilization and to the usual aggressive chamicals, displaying equivalent characteristics to solvent-based epoxyphenolic paints.

The painted metal plate was submitted to a test for sterilization resistance, carried out by keeping the system 90 minutes at 120°C in an autoclave. The paint remained intact, without showing any losses of adhesion or of mechanical properties.

In a different application, the aqueous emulsion was suitably diluted in water down to a content of 25% of solid matter, and galvanized sheet irons were dipped in it which, after being wetted with paint, were submitted to a 20-minutes oven baking cycle at 200°C. The crosslinked paint showed an extremely good water-repellant power and after a treatment in boiling water for about 1000 hours, no phenomena of loss of adhesion to the metal support, or of blistering (crater formation) were observed.

### Example 2

In a reaction vessel of 2000 ml of capacity equipped with stirrer, thermometer and reflux condenser, 200 g of EPOSIR 7180 was dissolved in 70 g of butyl Cellosolve.

When dissolution was complete, the temperature was increased up to 75°C, then 25 g of JEFFAMINE C-346 (TEXACO) was added and the condensation reaction was allowed to proceed for 10-30 minutes. Then, 60 g of phenolic resin --previously prepared as specified in Example 1 -- with a solid matter content of 70% was added, and the condensation reaction was allowed to proceed for 50 minutes at 75°C. When condensation was complete, the reaction mixture was neutralized with 6 g of acetic acid and the system was allowed to react for about 5 minutes. After the neutralization, the system was dispersed in water, while simultaneously slowly adding, with strong stirring, 420 g of demineralized water. An aqueous epoxyphenolic emulsion was thus obtained, which had the following characteristics:
^{*} Solids content : 36 ± 1%
^{*} Viscosity at 25°C : 250 mPa.s
^{*} H₂0 content : 53%

The application tests on a support consisting of white latten or aluminum evidenced extremely good characteristics of hardness, flexibility and resistance to sterilization of the paint film.

### Example 3

In a reactor of 3000 ml equipped with stirrer, thermometer and reflux condenser, 280 of EPOSI R 7170 with EEW = 800-950 was dissolved in 80 g of butyl Cellosolve. To the solution, 60 g of previously prepared epoxy adduct AE was added, and the resulting system was allowed to condense for 10-30 minutes at 75°C. Subsequently, 230 g of phenolic resin, as previously prepared as indicated in Example 1, containing 70% of solid matter, was added. The system was allowed to condense for approximately 30 minutes, with its temperature being maintained at 70-75°C. The reaction mass was neutralized with 10 g of acetic acid, and was submitted to the same treatment of the preceding Examples, in order to obtain the aqueous dispersion, having the following characteristics:
^{*} Solids content : 38± 1%;
^{*} Viscosity at 25°C : 100 mPa.s;
^{*} H₂0 content : 49%

## Claims (Claims for the following Contracting State(s) : AT, BE, CH, DE, DK, FR, GB, GR, IT, LI, LU, NL, PT, SE)

1. Aqueous emulsions of epoxyphenolic resins comprising the product of reaction of an epoxy resin with an epoxy equivalent weight value from 400 to 3500 with an epoxy resin modifier selected from:
(a) an adduct of an epoxy resin of formula 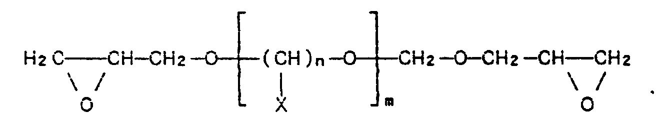 wherein:
1 < n ≤ 3; 2 < m ≤ 40; X = hydrogen, alkyl, alkoxy, and an amine selected from among the amines of formula: 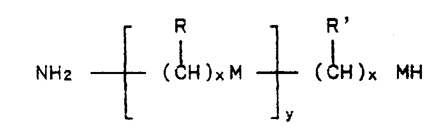 wherein:
R and R', which may be equal to, or different from, each other, can be hydrogen, C₁-C₆ alkyl radical, OH, CH₂0H, CH₂0R, NHR;
M = oxygen or sulfur;
1≤x≤4;
0≤y≤10, and
(b) a secondary amine of formula: 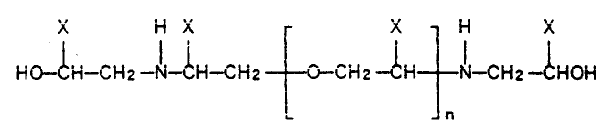 wherein:
X = hydrogen, C₁-C_{S} alkyl or alkoxy, OH, polyoxyalkylene;
2 < n ≤ 10, secondary nitrogen atoms of the epoxy resin modifier being quaternized with a volatile organic acid.

2. Aqueous emulsions according to claim 1, wherein the epoxy resin modifier is an adduct having the formula: 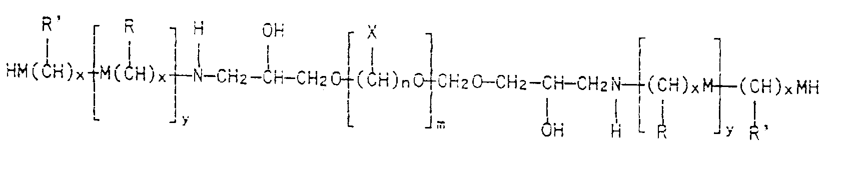 wherein:
M = oxygen or sulfur;
R and R', which may be equal to, or different from, each other, are hydrogen, C₁-C₆ alkyl radical, OH; X = hydrogen, C₁-C₆ alkyl or alkoxy, OH, polyoxyalkylene;
1≤x≤4;
0≤y≤10;
2≤m≤40.

3. Aqueous emulsions according to claim 1, wherein the epoxy resin modifier has the formula: 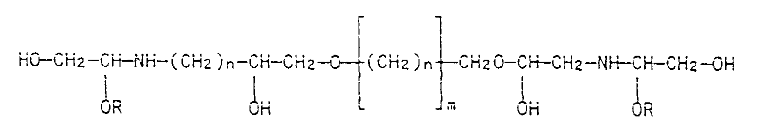 wherein: 2≤ m ≤ 40;
1≤n≤3;
R is a C₁-C₆ alkyl radical.

4. Aqueous emulsions of epoxyphenolic resins comprising the product of reaction of an epoxy resin with an epoxy resin modifier as indicated in any of the preceding claims, and a phenolic resin of resolic type.

5. Aqueous emulsions of epoxy resins containing from 10 to 80% by weight of non-volatile substances and organic solvents in smaller amounts than 20% by weight, and comprising the reaction product of an epoxy resin constituted by the condensation product of bisphenol A or F and an epichlorohydrin having a value of epoxy equivalent weight comprised within the range of from 400 to 3500 g, and an epoxy resin modifier as indicated in any of the preceding claims, with a phenolic resin of resolic type.

6. Aqueous emulsions according to claim 5, in which the epoxy resin, the epoxy resin modifier and the phenolic resin represent 40-80%, up to 20% and 20-40% by weight, respectively, relatively to the weight of non-volatile matter.

7. Preparation of the emulsions according to claims 4 and 5 in which the epoxy resin, the epoxy resin modifier and the phenolic resin are pre-condensed in a water-miscible solvent, and then water is added to the system, with a water-in-oil emulsion, and then an oil-in-water emulsion being obtained.

## Claims (Claims for the following Contracting State(s) : ES)

1. Process for preparing aqueous emulsions of epoxyphenolic resins characterized in that there are made to react an epoxy resin with an epoxy equivalent weight value from 400 to 3500 and an epoxy resin modifier selected from:
(a) an adduct of an epoxy resin of formula 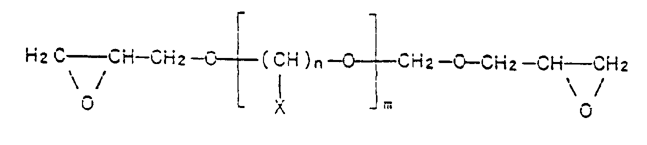 wherein:
1 < n ≤ 3; 2 < m < 40; X = hydrogen, alkyl, alkoxy, and an amine selected from among the amines of formula: 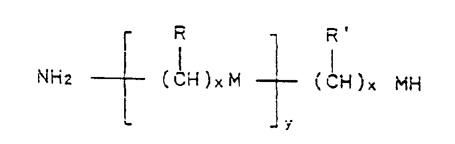 wherein:
R and R', which may be equal to, or different from, each other, can be hydrogen, C₁-C_{S} alkyl radical, OH, CH₂0H, CH₂0R, NHR;
M = oxygen or sulfur;
1≤x≤4;
0 < y < 10, and
(b) a secondary amine of formula: 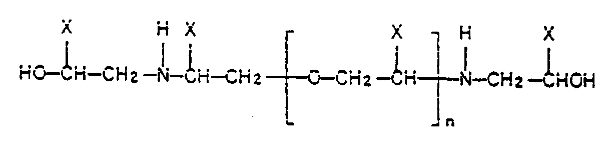 wherein:
X = hydrogen, C₁-C_{S} alkyl or alkoxy, OH, polyoxyalkylene;
2≤n≤ 10, secondary nitrogen atoms of the epoxy resin modifier being quaternized with a volatile organic acid.

2. Process for preparing the aqueous emulsions according to claim 1, wherein the epoxy resin modifier is an adduct having the formula: 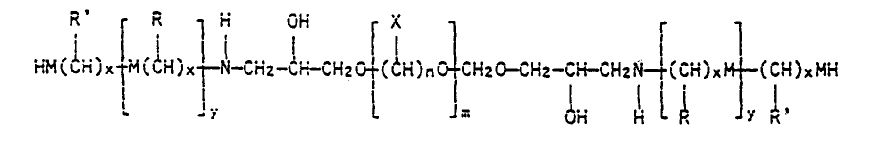 wherein:
M = oxygen or sulfur;
R and R', which may be equal to, or different from, each other, arc hydrogen, C₁-C₆ alkyl radical, OH;
X = hydrogen, C₁-C_{S} alkyl or alkoxy, OH, polyoxyalkylene;
1≤x≤4;
0≤y≤10;
2<m<40.

3. Process for preparing the aqueous emulsions according to claim 1, wherein the epoxy resin modifier has the formula: 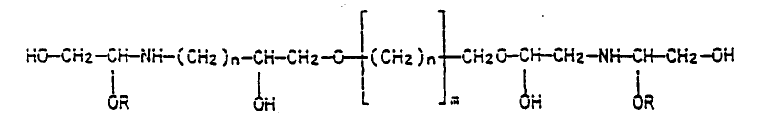 wherein: 2 < m <40;
1≤n≤3;
R is a C₁-C_{S} alkyl radical.

4. Process for preparing aqueous emulsions of epoxyphenolic resins characterized in that there are made to react an epoxy resin and an epoxy resin modifier as indicated in any of the preceding claims, and a phenolic resin of resolic type.

5. Process for preparing aqueous emulsions of epoxy resins characterized in that it contains from 10 to 80% by weight of non-volatile substances and organic solvents in smaller amounts than 20% by weight, said process being characterized in that there are made to react an epoxy resin constituted by the condensation product of bisphenol A or F and an epichlorohydrin having a value of epoxy equivalent weight comprised within the range of from 400 to 3500 g, and an epoxy resin modifier as indicated in any of the preceding claims, with a phenolic resin of resolic type.

6. Process for preparing the aqueous emulsions according to claim 5, in which the epoxy resin, the epoxy resin modifier and the phenolic resin represent 40-80%, up to 20% and 20-40% by weight, respectively, relatively to the weight of non-volatile matter.

7. Process for prearing the emulsions according to claims 4 and 5 in which the epoxy resin, the epoxy resin modifier and the phenolic resin are pre-condensed in a water-miscible solvent, and then water is added to the system, with a water-in-oil emulsion, and then an oil-in-water emulsion being obtained.

## Patentansprüche (Patentansprüche für folgende(n) Vertragsstaat(en) : AT, BE, CH, LI, DE, DK, FR, GB, GR, IT, LU, NL, PT, SE)

1. Wässrige Emulsionen auf der Basis von Epoxyd- und Phenolharzen, umfassend das Reaktionsprodukt eines Epoxydharzes, das ein Epoxydäquivalentgewichtswert von 400 bis zu 3500 g hat, mit einem Epoxydharzmodifizierer gewählt aus:
(a) einer Verbindung eines Epoxydharzes der Formel 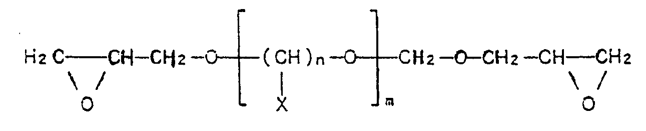 in der 1 < n ≤ 3; 2 < m ≤ 40; X = Wasserstoff, Alkyl, Alkoxy, und ein Amin gewählt aus Aminen der Formel: 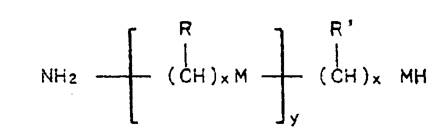 in der:
R und R', die gleich oder verschieden sein können, Wasserstoff, C₁ -C₆ Alkylradikal, OH, CH₂0H, CH₂0R, NHR sein können;
M = Sauerstoff oder Schwefel;
1≤x≤4;
0≤ y 10,und 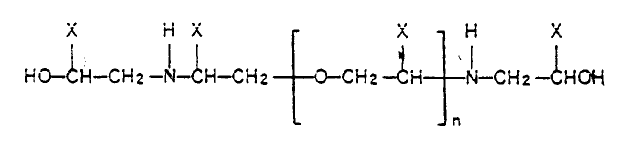 in der:
X = Wasserstoff, C₁-C₆ Alkyl oder Alkoxy, OH, Polyoxyalkylen;
2 < n < 10, wobei sekundäre Stichstoffatomen des Epoxydharzmodifizierers mit einer flüchtigen organischen Säure quaternär werden.

2. Verfahren zur Herstellung wässriger Emulsionen nach Anspruch 1, in dem der Epoxydharzmodifzierer eine Verbindung der Formel ist: 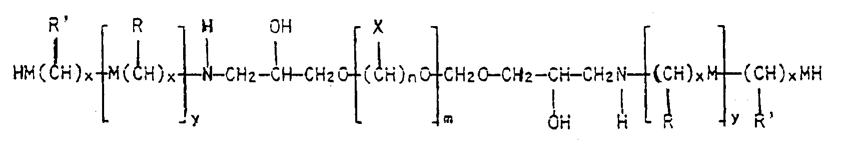 in der:
M = Sauerstoff oder Schwefel;
R und R', die gleich oder verschieden sein können, Wasserstoff, Cᵢ-C₆ Alkylradikal, OH sind;
X = Wasserstoff, C₁-C₆ Alkyl oder Alkoxy, OH, Polyoxyalkylen;
1≤x≤4;
0≤y≤10;
2≤m≤40.

3. Verfahren zur Herstellung wässriger Emulsionen nach Anspruch 1, in dem der Epoxydharzmodifizierer die folgende Formel hat: 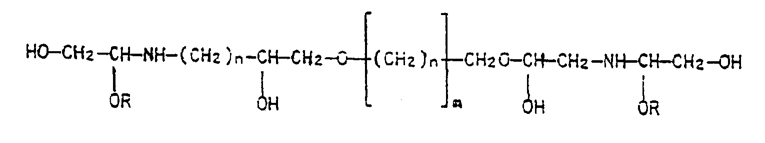 in der: 2≤ ≤m ≤40;
1≤n≤3;
R ein C₁-C_{S} Alkylradikal ist.

4. Verfahren zur Herstellung wässriger Emulsionen von Epoxyd- Phenolharzen, dadurch gekennzeichnet, daß man ein Epoxydharz und einen Epoxydharzmodifizierer, nach jedem der vorherigen Ansprüche, und ein Phenolharz von resolischem Typ reagieren lässt.

5. Verfahren zur Herstellung wässriger Emulsionen von Epoxydharzen, dadurch gekennzeichnet, daß sie 10 bis 80% unflüchtiger Stoffe und organischer Lösungsmittel in kleineren Mengen als 20% im Gewicht enthalten; das obengenannte Verfahren dadurch gekennzeichnet, daß man ein Epoxydharz bestehend aus dem Kondensat von Bisphenol A oder F und einen Epichlorohydrin mit einem Epoxydäquivalentgewichtswert von 400 bis zu 3500 g und einen Epoxydharzmodifizierer nach jedem der vorherigen Ansprüche mit einem Phenolharz von resolischem Typ reagieren lässt.

6. Verfahren zur Herstellung der wässrigen Emulsionen nach Anspruch 5, in dem das Epoxydharz, der Epoxydharzmodifizierer und das Phenolharz bzw. 40-80%, bis 20% und 20-40% im Gewicht mit Bezug auf das Gewicht von unflüchtigem Stoff darstellen.

7. Verfahren zur Herstellung der Emulsionen nach Ansprüche 4 und 5, in dem das Epoxydharz, der Epoxydharzmodifizierer und das Phenolharz in einem wassermischbaren Lösungsmittel vorher kondensiert werden, und dann Wasser mit einer Wasser-im-ÖI Emulsion zum System hinzugefügt wird, und dann eine ÖI-im-Wasser Emulsion erhalten wird.

## Patentansprüche (Patentansprüche für folgende(n) Vertragsstaat(en) : ES)

1. Verfahren zur Herstellung wässriger Emulsionen von Epoxyd- Phenolharzen, dadurch gekennzeichnet, daß man ein Epoxydharz mit einem Epoxydäquivalentgewichtswertvon 400 bis zu 3500 g und einen Epoxydharzmodifizierer reagieren lässt, Epoxydharzmodifizierer gewählt aus:
(a) einer Verbindung eines Epoxydharzes der Formel 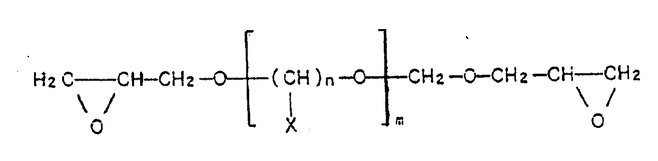 in der 1 ≤ n ≤ 3; 2 < m ≤ 40; X = Wasserstoff, Alkyl, Alkoxy, und ein Amin gewählt aus Aminen der Formel: 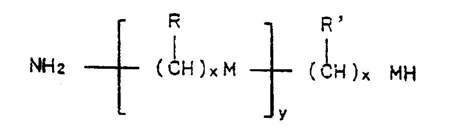 in der:
R und R', die gleich oder verschieden sein können, Wasserstoff, C₁-C₆ Alkylradikal, OH, CH₂0H, CH₂0R, NHR sein können;
M = Sauerstoff oder Schwefel;
1≤x≤4;
0≤y≤10,und
(b) einem sekundären Amin der Formel:
(b) einem sekundären Amin der Formel: 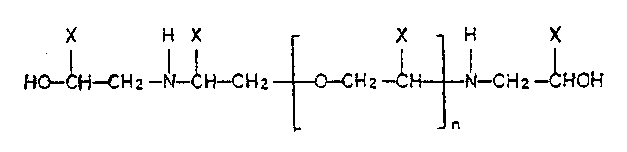 in der:
X = Wasserstoff, C₁-C₆ Alkyl oder Alkoxy, OH, Polyalkylen;
2 < n < 10, wobei sekundäre Stichstoffatomen des Epoxydharzmodifizierers mit einer flüchtigen organischen Säure quaternär werden.

2. Wässrige Emulsionen nach Anspruch 1, in denen der Epoxydharzmodifizierer eine Verbindung der Formel ist: 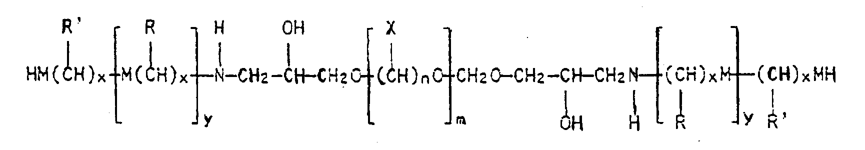 in der:
M = Sauerstoff oder Schwefel;
R und R', die gleich oder verschieden sein können, Wasserstoff, C₁-C₆ Alkylradikal, OH sind; X = Wasserstoff, C₁-C₆ Alkyl oder Alkoxy, OH, Polyoxyalkylen;
1≤x≤4;
0≤y≤10;
2 < m < 40.

3. Wässrige Emulsionen nach Anspruch 1, in denen der Epoxydharzmodifizierer die folgende Formel hat: 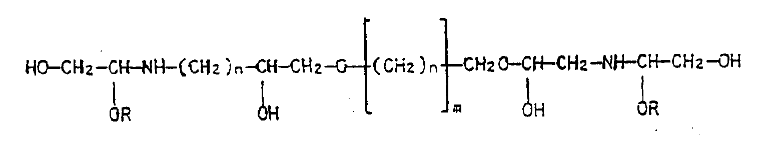 in der: 2≤ ≤m ≤40;
1≤n≤3;
R ein C₁-C₆ Alkylradikal ist.

4. Wässrige Emulsionen von Epoxyd- und Phenolharzen umfassend das Reaktionsprodukt eines Epoxydharzes mit einem Epoxydharzmodifizierer, nach jedem der vorherigen Ansprüche, und einem Phenolharz von resolischem Typ.

5. Wässrige Emulsionen von Epoxydharzen enthaltend 10-80% im Gewicht unflüchtiger Stoffe und organischer Lösungsmittel in kleineren Mengen als 20% im Gewicht, und umfassend das Reaktionsprodukt eines Epoxydharzes bestehend aus dem Kondensat von Bisphenol A oder F und einem Epichlorohydrin, das ein Epoxydäquivalentgewichtswert von 400 bis zu 3500 g hat, und eines Epoxydharzmodifizierers nach jedem der vorherigen Ansprüche mit einem Phenolharz von resolischem Typ.

6. Wässrige Emulsionen nach Anspruch 5, in denen das Epoxydharz, der Epoxydharzmodifizierer und das Phenolharz bzw. 40-80%, bis 20% und 20-40% im Gewicht mit Bezug auf das Gewicht von unflüchtigem Stoff darstellen.

7. Vorbereitung der Emulsionen nach Ansprüche 4 und 5, in der das Epoxydharz, der Epoxydharzmodifizierer und das Phenolharz in einem wassermischbaren Lösungsmittel vorher kondensiert werden, und dann Wasser mit einer Wasser-im-ÖI Emulsion zum System hinzugefügt wird und dann eine ÖI-im-Wasser Emulsion erhalten wird.

## Revendications (Revendications pour l'(les) Etat(s) contractant(s) suivant(s) : AT, BE, CH, DE, DK, FR, GB, IT, LI, LU, NL, PT, SE)

1. Émulsions aqueuses à base de résines époxydes et phénoliques comprenant le produit de réaction d'une résine époxyde avec un poids équivalent époxyde de 400 jusqu'à 3500 g avec un modificateur de résine époxyde choisi entre:
(a) un composé d'une résine époxyde de formule 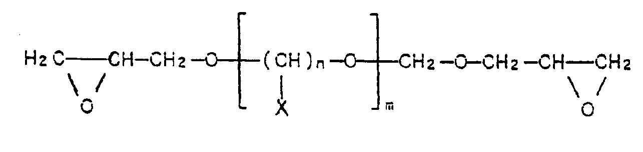 où 1 ≤ n ≤3; 2 < m ≤40; X = hydrogène, alkyle, alkoxy, et une amine choisie entre les amines de formule: 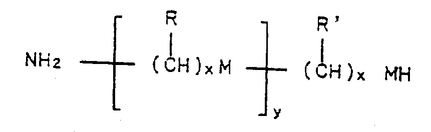 où:
R et R', qui peuvent être les mêmes ou différents entre eux, peuvent être hydrogène, alkyle radical C₁-C₆ , OH, CH₂0H, CH₂0R, NHR;
M = oxygène ou soufre;
1≤x≤4;
0≤y≤10,et
(b) une amine secondaire de formule: 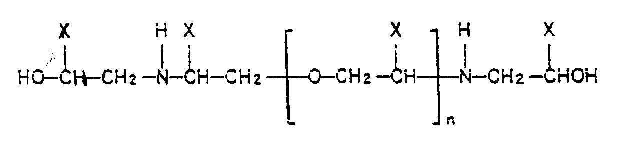 où:
X = hydrogène, alkyle ou alkoxy C₁-C₆, OH, polyoxyalkylène,
2 < n < 10, les atomes d'azote secondaire du modificateur de résine époxyde devienant quaternaires avec un acide organique volatil.

2. Émulsions aqueuses selon la revendication 1, où le modificateur de résine époxyde est un composé de formule: 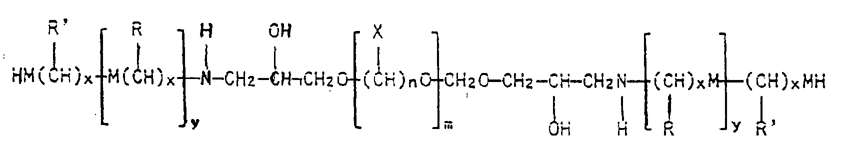 où:
M = oxygène ou soufre;
R et R', qui peuvent être les mêmes ou différents entre eux, sont hydrogène, alkyle radical C₁-C₆, OH;
X = hydrogène, alkyle ou alkoxy Ci-C₆, OH, polyoxyalkylène;
1≤x≤4;
0≤y≤10;
2≤m≤40.

3. Émulsions aqueuses selon la revendication 1, où le modificateur de résine époxyde a la formule: 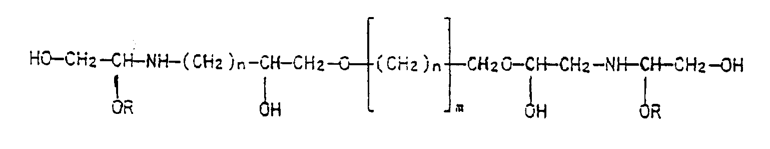 où: 2≤ m ≤ 40;
1≤n≤3;
R est un alkyle radical Ci -Ce

4. Émulsions aqueuses de résines époxydes et phénoliques comprenant le produit de réaction d'une résine époxyde avec un modificateur de résine époxyde comme indiqué dans une quelconque des revendications précédentes, et une résine phénolique du genre résolique.

5. Émulsions aqueuses de résines époxydes contenant de 10 jusqu'à 80% en poids de substances non volatiles et de solvants organiques en quantités inférieures de 20% en poids, et comprenant le produit de réaction d'une résine époxyde constituée par le produit de condensation de bisphénol A ou F et une épichlorohydrine ayant un poids équivalent époxyde de 400 jusqu'à 3500 g, et un modificateur de résine époxyde comme indiqué dans l'une quelconque des revendications précédentes, avec une résine phénolique du genre résolique.

6. Émulsions aqueuses selon la revendication 5, où la résine époxyde, le modificateur de résine époxyde et la résine phénolique représent 40-80%, jusqu'à 20% et 20-40% en poids, respectivement, par rapport au poids de la substance non volatile.

7. Préparation des émulsions selon les revendications 4 et 5, où la résine époxyde, le modificateur de résine époxyde et la résine phénolique sont précondensés dans un solvant miscible à l'eau et puis on ajoute de l'eau au système avec une émulsion du genre eau-dans-huile et puis on obtient une émulsion huile-dans-eau.

## Revendications (Revendications pour l'(les) Etat(s) contractant(s) suivant(s) : ES)

1. Procédé de préparation d'émulsions aqueuses de résines époxydes et phénoliques, caractérisé en ce qu'on fait réagir une résine époxyde avec un poids équivalent époxyde de 400 jusqu'à 3500 g avec un modificateur de résine époxyde choisi entre:
(a) un composé d'une résine époxyde de formule 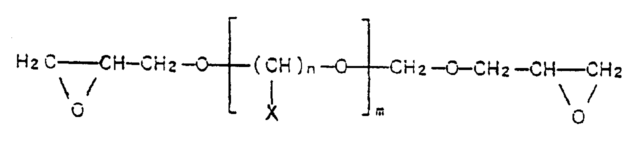 où 1 ≤n 3; 2 ≤m 40; X = hydrogène, alkyle, alkoxy, et une amine choisie entre les amines de formule: 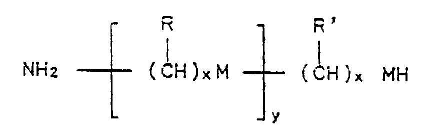 où:
R et R', qui peuvent être les mêmes ou différents entre eux, peuvent être hydrogène, alkyle radical C₁-C₆ ,OH, CH₂0H, CH₂0R, NHR;
M = oxygène ou soufre;
1≤x≤4;
0≤y≤10,et
(b) une amine secondaire de formule: 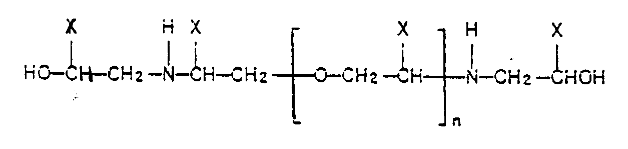 où:
X = hydrogène, alkyle ou alkoxy C₁-C₆, OH, polyoxyalkylène,
2 < n < 10, les atomes d'azote secondaire du modificateur de résine époxyde devenant quaternaires avec un acide organique volatil.
Procédé de préparation d'émulsions aqueuses selon la revendication 1, où le modificateur de résine époxyde est un composé de formule: 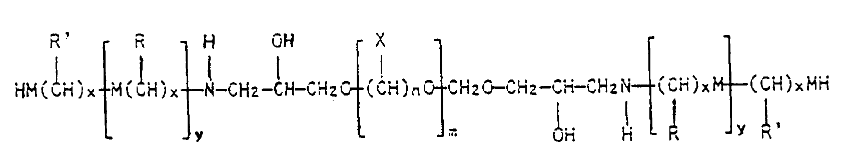 où:
M = oxygène ou soufre;
R et R', qui peuvent être les mêmes ou différents entre eux, sont hydrogène, alkyle radical C₁-C₆, OH;
X = hydrogène, alkyle ou alkoxy C₁-C₆, OH, polyoxyalkylène;
1≤x≤4;
0≤y≤10;
2≤m≤40.

3. Procédé de préparation des émulsions aqueuses selon la revendication 1, où le modificateur de résine époxyde a la formule: 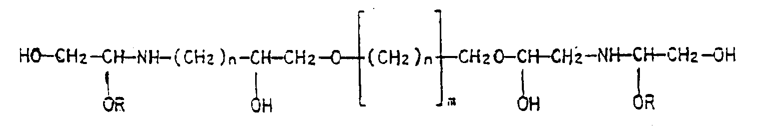 où: 2≤m≤40;
1≤n≤3;
R est un alkyle radical C₁-C₆.

4. Procédé de préparation d'émulsions aqueuses de résines époxydes et phénoliques caracterisé en ce qu'on fait réagir une résine époxyde avec un modificateur de résine époxyde comme indiqué dans une quelconque des revendications précédentes, et une résine phénolique du genre résolique.

5. Procédé de préparation d'émulsions aqueuses de résines époxydes caractérisé en ce qu'elles contiennent de 10 jusqu'à 80% en poids de substances non volatiles et de solvants organiques en quantités inférieures de 20% en poids, et en ce qu'on fait réagir une résine époxyde constituée par le produit de condensation de bisphénol A ou F et une épichlorohydrine ayant un poids équivalent époxyde de 400 jusqu'à 3500 g, et un modificateur de résine époxyde comme indiqué dans une quelconque des revendications précédentes, avec une résine phénolique du genre résolique.

6. Procédé de préparation des émulsions aqueuses selon la revendication 5, où la résine époxyde, le modificateur de résine époxyde et la résine phénolique représent 40-80%, jusqu'à 20% et 20-40% en poids, respectivement, par rapport au poids de la substance non volatile.

7. Procédé de préparation des émulsions selon les revendications 4 et 5, où la résine époxyde, le modificateur de résine époxyde et la résine phénolique sont précondensés dans un solvant miscible à l'eau et puis on ajoute de l'eau au système avec une émulsion du genre eau-dans-huile et puis on obtient une émulsion huile-dans-eau.
